# EUROPEAN PATENT APPLICATION

(11) **EP 4 848 792 A1**
(43) Date of publication of application: **02.12.2026**
(21) Application number: 24920311.8
(22) Date of filing: 24.01.2024
(51) Int. Cl.: H04W 24/10, H04W 36/14

(54) **TERMINAL**

(71) Applicant: NTT DOCOMO, INC., Tokyo 100-6150 (JP)
(72) Inventor: MIN, Tianyang, Tokyo 100-6150 (JP); SAGAE, Yuta, Tokyo 100-6150 (JP)
(74) Representative: Hoffmann Eitle
(86) International application number: PCT/JP2024/002089
(87) International publication number: WO 2025/158589

(57) **Abstract**

A terminal includes a reception unit that receives a measurement configuration including an indication indicating a priority, a control unit that controls a measurement order of a plurality of candidate cells based on the priority, and a transmission unit that transmits a measurement report including a measurement result measured according to the measurement order to a network.

## Description

### TECHNICAL FIELD

The present disclosure relates to a terminal that executes a cell transition between different radio access technologies (RATs).

### BACKGROUND ART

The 3rd Generation Partnership Project (3GPP: registered trademark) has specified the 5th generation mobile communication system (also referred to as 5G, New Radio (NR), or Next Generation (NG)), and is also proceeding with the specification of the next generation called Beyond 5G, 5G Evolution, or 6G.

In 5G, a terminal (User Equipment, UE) measures a cell quality of a candidate cell of a transition destination (handover destination), and executes a handover to the candidate cell when satisfying an event (condition) defined using a threshold value or the like (Non-Patent Literature 1).

### CITATION LIST

### NON-PATENT LITERATURE

Non-Patent Literature 1: 3GPP TS 38.331 V17.5.0, 3rd Generation Partnership Project; Technical Specification Group Radio Access Network; NR; Radio Resource Control (RRC) protocol specification (Release 17), 3GPP, June 2023

### SUMMARY OF INVENTION

Incidentally, in a migration from 5G to 6G, there is a high possibility that there are needs of an operator or the like who wants to preferentially transition (handover) a UE to a cell utilizing a specific radio access technology (RAT).

Further, in an initial stage of the migration from 5G to 6G, there is a high possibility that a cell according to a 4th generation mobile communication system (4G)/Long Term Evolution (LTE) also exists, and a situation is assumed in which it is desired to preferentially transition to a desired cell such as a cell according to a specific RAT.

However, current 3GPP specifications cannot satisfy such detailed needs. Therefore, the following disclosure has been made in view of such a situation, and an object thereof is to provide a terminal that realizes a transition to a desired cell when a plurality of types of cells exist.

An aspect of the present disclosure is a terminal including a reception unit (control signal/reference signal processing unit 240) that receives a measurement configuration including an indication indicating a priority, a control unit (control unit 270) that controls a measurement order of a plurality of candidate cells based on the priority, and a transmission unit (control signal/reference signal processing unit 240) that transmits a measurement report including a measurement result measured according to the measurement order to a network.

An aspect of the present disclosure is a terminal including a reception unit (control signal/reference signal processing unit 240) that receives system information including an indication indicating a priority, a control unit (control unit 270) that controls a measurement order of a plurality of candidate cells based on the priority, and a transmission unit (control signal/reference signal processing unit 240) that transmits a measurement report including a measurement result measured according to the measurement order to a network.

### BRIEF DESCRIPTION OF DRAWINGS

[Fig. 1] Fig. 1 is an overall schematic configuration diagram of a radio communication system 10.
[Fig. 2] Fig. 2 is a diagram illustrating a configuration example of a radio frame, a subframe, and a slot used in the radio communication system 10.
[Fig. 3] Fig. 3 is a functional block configuration diagram of a gNB 100 and a UE 200.
[Fig. 4] Fig. 4 is a diagram illustrating a cell configuration example when a 4G cell, a 5G cell, and a 6G cell coexist.
[Fig. 5] Fig. 5 is a diagram illustrating a basic sequence example regarding Measurement reporting.
[Fig. 6] Fig. 6 is a diagram illustrating a configuration example of measConfig.
[Fig. 7] Fig. 7 is a diagram illustrating a configuration example of the 5G cell and the 6G cell.
[Fig. 8] Fig. 8 is a diagram illustrating an example of a hardware configuration of the gNB 100 and the UE 200.
[Fig. 9] Fig. 9 is a diagram illustrating a configuration example of a vehicle 2001.

### DESCRIPTION OF EMBODIMENTS

Hereinafter, embodiments will be described based on the drawings. Note that the same or similar reference numerals are attached to the same functions and configurations, and the description thereof will be appropriately omitted.

### (1) Overall schematic configuration of radio communication system

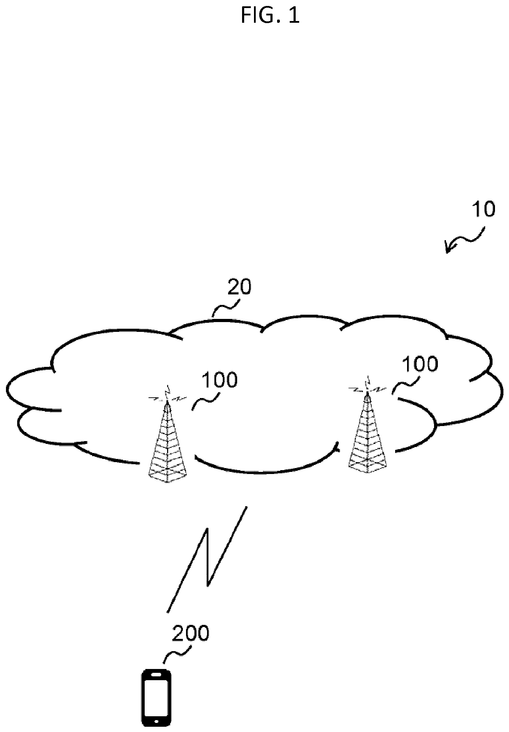

Fig. 1 is an overall schematic configuration diagram of a radio communication system 10 according to the present embodiment. The radio communication system 10 is a radio communication system according to a scheme called 4G/LTE, 5G New Radio (NR), Beyond 5G, and 5G Evolution or 6G (hereinafter referred to as 6G), and includes a Radio Access Network 20 (hereinafter, RAN 20) and a terminal 200 (User Equipment 200, hereinafter, UE 200). Note that the radio communication system 10 may jointly use radio access technologies (RATs) of 4G, 5G, and 6G.

The RAN 20 includes a radio base station 100 (hereinafter, a gNB 100). Note that a specific configuration of the radio communication system 10 including the number of gNBs (which may be eNBs or the like) and UEs is not limited to the example shown in Fig. 1.

Further, the gNB 100 may adopt a fronthaul (FH) interface specified by an O-RAN (Open Radio Access Network Alliance). The gNB 100 may include an O-DU (O-RAN Distributed Unit) and an O-RU (O-RAN Radio Unit). The gNB 100 can function as a kind of NG-RAN node.

The RAN 20 actually includes a plurality of NG-RAN Nodes, specifically, gNBs (or ng-eNBs), and is connected to a core network (not shown) according to 5G. The RAN 20 and the core network may be simply expressed as a "network".

The gNB 100 is a radio base station according to 4G, 5G, or 6G, and executes radio communication according to 4G, 5G, or 6G with the UE 200. Note that the gNB 100 may be configured to include a CU (Central Unit) and a DU (Distributed Unit), and the DU may be separated from the CU and installed in a geographically different location. One or a plurality of DUs may be connected to the CU. Further, the gNBs 100 (gNB-CUs) may be connected by an Xn interface, and the CU and the DU may be connected by an F1 interface (such as F1-AP).

The gNB 100 and the UE 200 can support Massive MIMO that generates a beam with higher directivity by controlling radio signals transmitted from a plurality of antenna elements, carrier aggregation (CA) that bundles and uses a plurality of component carriers (CCs), dual connectivity (DC) that simultaneously communicates between a UE and each of two or more RAN Nodes, and the like. For example, any one of the gNBs may configure a master node (MN), and another one or a plurality of gNBs may configure a secondary node (SN).

Further, the radio communication system 10 may support a plurality of frequency ranges (FRs) described below.
- FR1: 410 MHz to 7.125 GHz
- FR2-1: 24.25 GHz to 52.6 GHz

In FR1, a Sub-Carrier Spacing (SCS) of 15, 30, or 60 kHz may be used, and a bandwidth (BW) of 5 to 100 MHz may be used. FR2-1 is a higher frequency than FR1, and a subcarrier spacing (SCS) of 60 or 120 kHz (240 kHz may be included) may be used, and a bandwidth (BW) of 50 to 400 MHz may be used.

Note that the SCS may be interpreted as a numerology. The numerology is defined in 3GPP TS 38.300 and corresponds to one subcarrier spacing in a frequency domain.

Furthermore, the radio communication system 10 also supports a higher frequency band than the frequency band of FR2-1. Specifically, the radio communication system 10 supports a frequency band exceeding 52.6 GHz and up to 71 GHz. Such a high frequency band may be referred to as FR2-2.

When using a band exceeding 52.6 GHz, Cyclic Prefix-Orthogonal Frequency Division Multiplexing (CP-OFDM)/Discrete Fourier Transform - Spread (DFT-S-OFDM) having a larger Sub-Carrier Spacing (SCS) may be applied.

Further, in a high frequency band such as FR2-2, as described above, an increase in phase noise between carriers becomes a problem. Therefore, application of a larger (wider) SCS or a single carrier waveform may be necessary.

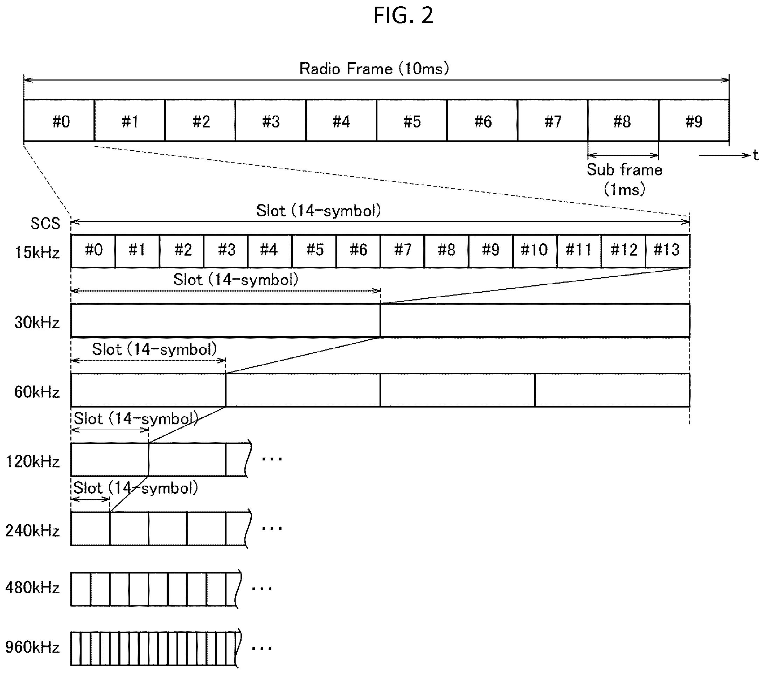

As the SCS is larger, a symbol/CP (Cyclic Prefix) period and a slot period become shorter (when a configuration of 14 symbols/slot is maintained). Fig. 2 shows a configuration example of a radio frame, a subframe, and a slot used in the radio communication system 10.

When the configuration of 14 symbols/slot is maintained, as the SCS becomes larger (wider), the symbol period (and the slot period) becomes shorter. Note that the symbol period may be referred to as a symbol length, a time direction, a time domain, or the like. In addition, the frequency direction may be referred to as a frequency domain, a resource block, a subcarrier, a BWP (Bandwidth part), or the like.

Frequency resources may include a component carrier (CC), a subcarrier, a resource block (RB), a resource block group (RBG), a BWP (Bandwidth part), and the like. Time resources may include a symbol, a slot, a mini slot, a subframe, a radio frame, a DRX (Discontinuous Reception) cycle, and the like.

Note that the number of symbols configuring one slot is not necessarily 14 symbols (for example, 28 or 56 symbols). Also, the number of slots per subframe may vary depending on the SCS.

Further, in the radio communication system 10, conditional handover (CHO) may be supported. In the CHO, a candidate cell for handover and an execution condition of the handover (which may be referred to as a transition) to the candidate cell are configured for the UE 200 in advance.

Accordingly, the UE 200 can perform handover to a target radio base station (which may also be referred to as a target cell) without waiting for a handover instruction from the network.

The CHO may be interpreted as a handover executed by the UE 200 when one or more execution conditions are satisfied. Upon receiving a CHO configuration, the UE 200 may start evaluation of the execution condition, and upon execution of a handover (a legacy handover or a conditional handover), may stop the evaluation of the execution condition.

A candidate gNB or a potential target gNB may provide the CHO configuration to the UE 200. A source gNB may provide execution conditions such as timing for triggering the CHO to the UE 200. The execution conditions may be configured by one or more trigger conditions.

Further, for the evaluation of the CHO execution conditions of the candidate cell, two or more different triggers, for example, RSRP (Reference Signal Received Power), RSRQ (Reference Signal Received Quality), SINR (Signal-to-Interference plus Noise power Ratio), and the like may be simultaneously configured.

Note that when CHO is configured in the UE 200 and the UE 200 receives another handover (HO) command from the gNB before the CHO execution condition is satisfied, the UE 200 may trigger the handover based on the received HO command, and does not need to wait for the CHO condition to be satisfied. That is, a legacy HO configuration may be prioritized over the CHO configuration (when configured).

Further, in the radio communication system 10, in addition to mobility management of the UE 200 by layer 3 (for example, a radio resource control layer (RRC) may be included) (which may be referred to as L3 Mobility), mobility management in layer 1/layer 2 (for example, a medium access control layer (MAC) may be included) (which may be referred to as LTM or L1/L2 mobility) may be applied.

The L3 Mobility may be interpreted as mobility control in a radio resource control layer (RRC). Meanwhile, the LTM may be interpreted as mobility control in a physical layer (PHY), a medium access control layer (MAC), a radio link control layer (RLC), and a packet data convergence protocol layer (PDCP).

Further, in UE-based LTM, like Conditional Handover (CHO), the UE may, after receiving a specific execution condition from a radio base station (gNB), monitor a state according to the execution condition, and when the execution condition is satisfied, execute LTM.

The mobility of the UE 200 may mean ease of movement and maneuverability of the UE 200 in a broad sense, but in the present embodiment, it may mean minimization of call drop, radio link (including beam) failure, unnecessary handover, ping-pong state, and the like.

The UE 200 transmits a measurement report including received quality regarding cells including a serving cell and a neighboring cell (hereinafter, Measurement report) to the network. A procedure in which the UE 200 transmits the Measurement report may be referred to as Measurement reporting. The received quality regarding the cell may include received quality of a beam from the cell, or may include received quality of the cell based on the beam from the cell.

The UE 200 may periodically execute the Measurement reporting. The UE 200 may execute the Measurement reporting for each event. An entering condition for starting the Measurement reporting and a leaving condition for ending the Measurement reporting may be defined for each event. Existing events may include events shown below (refer to 3GPP TS 38.331).

### (i) Event A1

Event A1 is an event in which received quality of a serving cell becomes better than a threshold. For example, the entering condition is Ms - Hys > Thresh, and the leaving condition is Ms + Hys < Thresh.

Here, Ms is received quality of the serving cell, Hys is a hysteresis parameter, and Thresh is a threshold.

### (ii) Event A2

Event A2 is an event in which received quality of a serving cell becomes worse than a threshold. For example, the entering condition is Ms + Hys < Thresh, and the leaving condition is Ms - Hys > Thresh.

Here, Ms is received quality of the serving cell, Hys is a hysteresis parameter, and Thresh is a threshold.

### (iii) Event A3

Event A3 is an event in which received quality of a neighboring cell becomes better than received quality of a serving cell by an offset. For example, the entering condition is Mn + Ofn + Ocn - Hys > Mp + Ofp + Ocp + Off, and the leaving condition is Mn + Ofn + Ocn + Hys < Mp + Ofp + Ocp + Off.

Here, Mn is received quality of the neighboring cell, Ofn is a measurement object specific offset, and Ocn is a cell specific offset. Mp is received quality of the serving cell, Ofp is a measurement object specific offset, and Ocp is a cell specific offset. Hys is a hysteresis parameter, and Off is a parameter used in Event A3.

### (iv) Event A4

Event A4 is an event in which received quality of a neighboring cell becomes better than a threshold. For example, the entering condition is Mn + Ofn + Ocn - Hys > Thresh, and the leaving condition is Mn + Ofn + Ocn + Hys < Thresh.

Here, Mn is received quality of the neighboring cell, Ofn is a measurement object specific offset, and Ocn is a cell specific offset. Hys is a hysteresis parameter, and Thresh is a threshold.

### (v) Event A5

Event A5 is an event in which received quality of a serving cell becomes worse than a threshold, and received quality of a neighboring cell becomes better than a threshold. For example, the entering conditions are Mp + Hys < Thresh1 and Mn + Ofn + Ocn - Hys > Thresh2, and the leaving conditions are Mp - Hys > Thresh1 and Mn + Ofn + Ocn + Hys < Thresh2.

Here, Ms is received quality of the serving cell, Hys is a hysteresis parameter, and Thresh1 is a threshold. Mn is received quality of the neighboring cell, Ofn is a measurement object specific offset, and Ocn is a cell specific offset. Hys is a hysteresis parameter, and Thresh2 is a threshold.

### (vi) Event A6

Event A6 is an event in which received quality of a neighboring cell becomes better than received quality of an SCell (Secondary Cell) by an offset. For example, the entering condition is Mn + Ocn - Hys > Ms + Ocs + Off, and the leaving condition is Mn + Ocn + Hys < Ms + Ocs + Off.

Note that, in addition to the events described above, an event relating to an inter-RAT (Radio Access Technology) (for example, B1 (Inter RAT neighbour becomes better than threshold) or B2 (Serving becomes worse than threshold1 and inter RAT neighbour becomes better than threshold2)) may be included.

Here, Mn is received quality of the neighboring cell, and Ocn is a cell specific offset. Ms is received quality of the SCell, and Ocs is a cell specific offset. Hys is a hysteresis parameter, and Off is a parameter used in Event A6.

Further, in the radio communication system 10, RATs of 4G, 5G, and 6G may be jointly used as described above. Also, in the radio communication system 10, in migration from 5G to 6G, Multi-RAT spectrum sharing (MRSS) may be applied. The MRSS may be referred to as Dynamic Spectrum Sharing (DSS) or the like, and can make a 5G cell and a 6G cell coexist in the same frequency band. Note that the 5G cell is a cell formed by a radio base station (gNB) according to a 5G RAT, and the 6G cell may be interpreted as a cell formed by a radio base station according to a 6G RAT. Further, the 4G cell may be interpreted as a cell formed by a radio base station according to a 4G RAT.

According to the MRSS, since a 5G cell and a 6G cell can share spectrum resources, there is an advantage such that transmission and reception using a common radio unit (RU) can be performed.

### (2) Functional block configuration of radio communication system

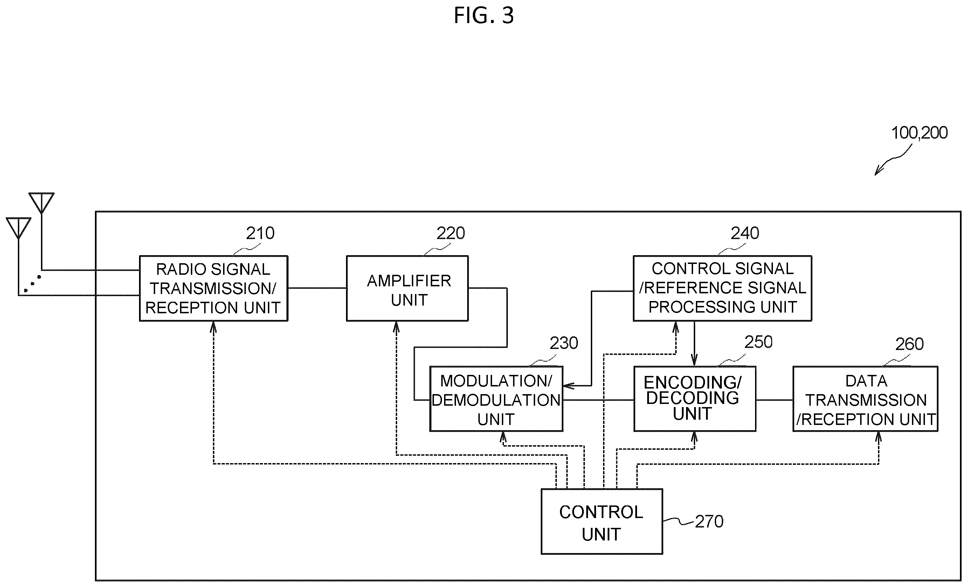

Next, a functional block configuration of the radio communication system 10 will be described. Specifically, a functional block configuration of the UE 200 will be described. Fig. 3 is a functional block configuration diagram of the gNB 100 and the UE 200.

As shown in Fig. 3, the UE 200 includes a radio signal transmission/reception unit 210, an amplifier unit 220, a modulation/demodulation unit 230, a control signal/reference signal processing unit 240, an encoding/decoding unit 250, a data transmission/reception unit 260, and a control unit 270.

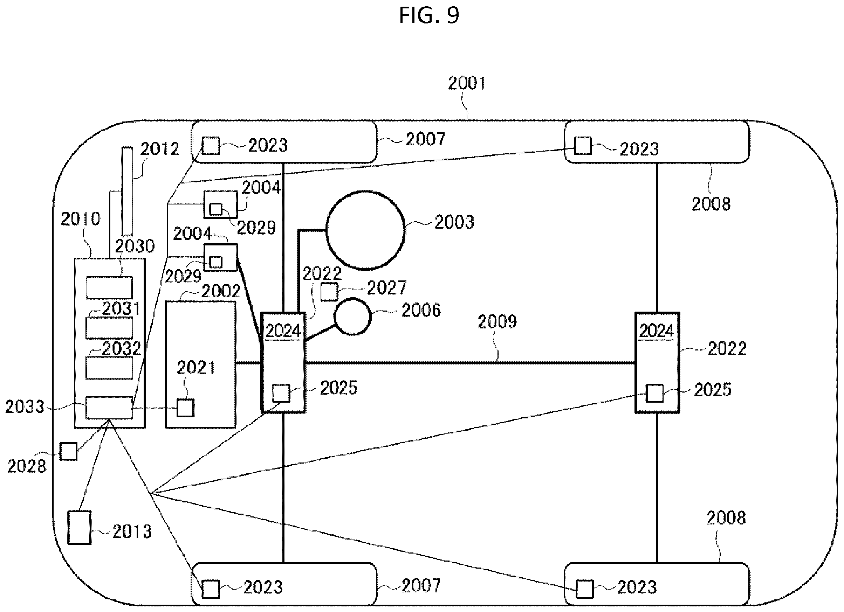

Note that in Fig. 3, only main functional blocks related to the description of the embodiment are shown, and it should be noted that the UE 200 (gNB 100) has other functional blocks (for example, a power supply unit and the like). Further, Fig. 3 shows a functional block configuration of the UE 200, and for a hardware configuration, refer to Fig. 9.

The radio signal transmission/reception unit 210 receives and transmits a radio signal according to 4G, 5G, or 6G. The radio signal transmission/reception unit 210 can support Massive MIMO that generates a beam with higher directivity by controlling radio (RF) signals transmitted from a plurality of antenna elements, carrier aggregation (CA) that bundles and uses a plurality of component carriers (CCs), dual connectivity (DC) that simultaneously communicates between a UE and each of two RAN Nodes, and the like.

The amplifier unit 220 is configured by a PA (Power Amplifier)/LNA (Low Noise Amplifier) or the like. The amplifier unit 220 amplifies a signal output from the modulation/demodulation unit 230 to a predetermined power level. Further, the amplifier unit 220 amplifies an RF signal output from the radio signal transmission/reception unit 210.

The modulation/demodulation unit 230 executes data modulation/demodulation, transmission power setting, resource block allocation, and the like for each predetermined communication destination (such as the gNB 100). In the modulation/demodulation unit 230, Cyclic Prefix-Orthogonal Frequency Division Multiplexing (CP-OFDM)/Discrete Fourier Transform - Spread (DFT-S-OFDM) may be applied. Further, DFT-S-OFDM may be used not only for an uplink (UL) but also for a downlink (DL).

The control signal/reference signal processing unit 240 executes processing regarding various control signals transmitted and received by the UE 200 and processing regarding various reference signals transmitted and received by the UE 200.

Specifically, the control signal/reference signal processing unit 240 receives various control signals, for example, control signals of a radio resource control layer (RRC), transmitted from the gNB 100 via a predetermined control channel. Further, the control signal/reference signal processing unit 240 transmits various control signals toward the gNB 100 via a predetermined control channel.

The control signal/reference signal processing unit 240 executes processing using a reference signal (RS) such as a Demodulation Reference Signal (DMRS) and a Tracking Reference Signal (TRS).

The DMRS is a UE-specific known reference signal (pilot signal) between a base station and a terminal for estimating a fading channel used for data demodulation. The TRS is a reference signal used when tracking a variation of time and frequency in a downlink.

Note that the reference signal may include, in addition to the DMRS and the TRS, a Channel State Information-Reference Signal (CSI-RS), a Sounding Reference Signal (SRS), a Positioning Reference Signal (PRS) for position information, and the like.

Further, the channel includes a control channel and a data channel. The control channel may include a PDCCH (Physical Downlink Control Channel), a PUCCH (Physical Uplink Control Channel), a RACH (Random Access Channel, Downlink Control Information (DCI) including a Random Access Radio Network Temporary Identifier (RA-RNTI)), a Physical Broadcast Channel (PBCH), and the like.

Further, the data channel includes a PDSCH (Physical Downlink Shared Channel), a PUSCH (Physical Uplink Shared Channel), and the like. Data may mean data transmitted via the data channel.

Further, the control signal/reference signal processing unit 240 may execute processing regarding transmission and reception of a message and a command regarding CHO and LTM. Specifically, the control signal/reference signal processing unit 240 may receive a message including an execution condition of a cell transition (handover) according to CHO or LTM from the network.

More specifically, the control signal/reference signal processing unit 240 may receive an RRC Reconfiguration including the execution condition from the network (gNB 100). In the present embodiment, the control signal/reference signal processing unit 240 may configure a reception unit. Note that the message may be another message of the RRC layer, or may be a message of a lower layer (PHY or MAC).

Further, the control signal/reference signal processing unit 240 may receive a message including a measurement configuration of cell quality. Specifically, the control signal/reference signal processing unit 240 may receive an RRC message or system information (SIB: System Information Block) including measConfig which is a kind of information element (IE) defined in 3GPP TS 38.331.

The measConfig (measurement configuration) may include an indication indicating a priority. Here, the priority may indicate a priority order of measurement of cell quality by the UE 200, or may indicate a priority order of a cell according to a specific RAT (for example, 4G). Alternatively, the priority may indicate a priority order of a specific frequency band (band). The specific frequency band may be allocated only to any RAT, or may be shared by a plurality of RATs. The priority may indicate a priority order by a number such as 0 to 7, for example, or may simply indicate that a cell, a RAT, or a frequency band of a specific type is prioritized over others.

As described above, the control signal/reference signal processing unit 240 can receive the measConfig (measurement configuration) including the indication indicating the priority. In the present embodiment, the control signal/reference signal processing unit 240 may configure a reception unit. The control signal/reference signal processing unit 240 may receive the measConfig including the indication indicating the priority associated with either measId (measurement identity) or measObject (measurement object) defined in 3GPP TS 38.331. That is, the priority may be linked with the measId and/or the measObject, or may be linked with the measConfig.

Further, the control signal/reference signal processing unit 240 may receive system information (SIB) including an indication indicating a priority. For example, the control signal/reference signal processing unit 240 may receive a SIB including a measurement priority of a frequency band (band) allocated to a specific RAT, or a priority of a frequency band utilized (stayed) by the UE 200. The type of SIB is not particularly limited, and for example, SIB2, 4, 5, or the like regarding cell reselection may be used.

The control signal/reference signal processing unit 240 can transmit a Measurement report including a measurement result (Measurement Results) measured according to the measurement order determined according to the above-described priority to the network. In the present embodiment, the control signal/reference signal processing unit 240 may configure a transmission unit.

The control signal/reference signal processing unit 240 may transmit the Measurement report having a high priority described above to the network earlier than the Measurement report having a low priority. Specifically, the control signal/reference signal processing unit 240 may preferentially transmit the Measurement report including Measurement Results of a measurement prioritized by the indication including the priority described above to the network.

Note that the network can configure Measurement reporting causing the UE to report a measurement result (Measurement results) per SS/PBCH Block. The network may configure Measurement reporting causing the UE to report Measurement results per SS/PBCH Block(s), or may configure Measurement reporting causing the UE to report Measurement results per cell based on the SS/PBCH Block(s). The network may configure Measurement reporting causing the UE to report Measurement results per CSI-RS resource, or may configure Measurement reporting causing the UE to report Measurement results per cell based on the CSI-RS resource.

The control signal/reference signal processing unit 240 may transmit a message regarding a cell transition to a candidate cell of a transition destination satisfying the execution condition of CHO or LTM. In the present embodiment, the control signal/reference signal processing unit 240 may configure a transmission unit.

Specifically, the control signal/reference signal processing unit 240 may transmit a message (which may be referred to as a command) to execute a handover (cell switch) according to CHO or LTM to the gNB 100.

The control signal/reference signal processing unit 240 may transmit capability information of the UE 200 to the network. For example, the control signal/reference signal processing unit 240 can transmit UE Capability Information regarding a trigger condition of CHO, LTM, and measurement report (Measurement reporting), and the like to the gNB 100.

The encoding/decoding unit 250 executes division/concatenation of data, channel coding/decoding, and the like for each predetermined communication destination (the gNB 100 or another gNB).

Specifically, the encoding/decoding unit 250 divides the data output from the data transmission/reception unit 260 into a predetermined size, and executes channel coding on the divided data. Further, the encoding/decoding unit 250 decodes the data output from the modulation/demodulation unit 230, and concatenates the decoded data.

The data transmission/reception unit 260 executes transmission and reception of a Protocol Data Unit (PDU) and a Service Data Unit (SDU). Specifically, the data transmission/reception unit 260 executes assembly/disassembly of a PDU/SDU in a plurality of layers (such as a medium access control layer (MAC), a radio link control layer (RLC), and a packet data convergence protocol layer (PDCP)). Further, the data transmission/reception unit 260 executes data error correction and retransmission control based on hybrid ARQ (Hybrid automatic repeat request).

The control unit 270 controls each functional block configuring the UE 200. In particular, in the present embodiment, the control unit 270 executes control regarding CHO, LTM, and NES.

Specifically, the control unit 270 controls a cell transition (handover) of the UE 200 according to LTM (mobility control by a lower layer). Further, the control unit 270 controls a cell transition (handover) according to conditional handover (CHO). In LTM and CHO, an execution condition used for determining whether to execute a cell transition (handover) may be applied.

The LTM may be interpreted as a cell transition by processing in a lower layer (L1/L2) as described above, and the CHO may be interpreted as a cell transition by processing in a higher layer (L3).

As described above, the control unit 270 may execute a terminal (UE)-led cell transition without an instruction from the network when an execution condition of CHO or LTM is satisfied. Further, the control unit 270 may preferentially execute a cell transition to a candidate cell utilizing a specific radio access technology (for example, 6G) based on an indication (6G or 5G) of a RAT utilized by the candidate cell. A cell type to be prioritized (for example, a 6G cell) may be set to the UE 200 in advance, or may be instructed from the network.

Note that the indication of the RAT may target all candidate cells (Candidate target cells), or may target only a candidate cell of any RAT. Further, instead of the indication of the RAT itself, an indication that preferentially selects a transition to a candidate cell of a RAT different from a transition source cell (Inter-RAT Cell) may be used. Further, instead of the indication of the RAT itself, or in addition to the indication of the RAT itself, an indication indicating a priority of transition to the candidate cell may be applied.

Further, the control unit 270 may control a measurement order of a plurality of candidate cells based on the priority described above. For example, the control unit 270 may prioritize measurement of a candidate cell having a high priority order over measurement of another candidate cell based on the priority associated with a measId (measurement identity) or a measObject (measurement object). As described above, the control unit 270 may control a measurement order based on the measId (measurement identity) or the measObject (measurement object) associated with the indication of the priority, and may instruct the control signal/reference signal processing unit 240 to execute measurement (such as RSRP) of cell quality (radio communication quality).

Alternatively, the control unit 270 may control a measurement order based on a priority different for each radio access technology (RAT). For example, the control unit 270 may prioritize measurement of a cell according to 6G over measurement of a cell according to another RAT (for example, 5G). Note that a prioritized RAT may be arbitrarily determined according to a state of the radio communication system 10, an operator's intention, or the like.

Further, the control unit 270 may control a measurement order based on a priority different for each frequency band (band). For example, when a priority of band A (for example, 700 MHz band) is higher than a priority of band B (for example, 800 MHz band), the control unit 270 may prioritize measurement of a cell utilizing band A over measurement of a cell utilizing band B. Further, the control unit 270 may prioritize a handover to a cell utilizing band A over a handover to a cell utilizing band B.

Further, the control unit 270 may execute measurement of cell quality based on measurement information of cell quality associated with the indication of RAT or the like described above. As described above, the indication of RAT or the like may be associated with a measId (measurement identity) or a measObject (measurement object). The control unit 270 may determine a measurement object or the like based on the associated measurement information, and may instruct the control signal/reference signal processing unit 240 to execute measurement (such as RSRP) of cell quality (radio communication quality).

Further, the control unit 270 may apply an execution condition relaxed to a candidate cell utilizing a specific RAT (for example, 6G) more than a candidate cell utilizing another RAT (for example, 5G). Specifically, the control unit 270 may set a threshold (Thresh) of Event A3, A4, A5, B1, and B2 regarding the Measurement reporting described above to be low (or may assume that it is set to be low).

Alternatively, the control unit 270 may shorten a time until a start of Measurement reporting (timeToTrigger) for a candidate cell utilizing a specific RAT, or may add an offset value so that an execution condition is easily satisfied. The control unit 270 may assume that timeToTrigger is set to be short for a candidate cell utilizing a specific RAT, or may assume that an execution condition is set to be easily satisfied.

The control unit 270 may prioritize measurement of cell quality of a candidate cell of the same frequency band utilizing a different RAT over other cells based on a measurement configuration (measConfig) of cell quality of a candidate cell. Specifically, the control unit 270 may preferentially execute intra-freq&inter-RAT measurement. More specifically, the control unit 270 may instruct the control signal/reference signal processing unit 240 to preferentially execute intra-freq&inter-RAT measurement.

Further, the gNB 100 (control signal/reference signal processing unit 240) may have a function corresponding to the UE 200 described above. For example, the gNB 100 may instruct the UE 200 of a threshold (Thresh) of Event A3, A4, A5, B1, and B2, timeToTrigger up to Measurement reporting, or an offset value for a candidate cell utilizing a specific RAT (for example, 6G). Further, the gNB 100 (control signal/reference signal processing unit 240) may instruct the UE 200 to prioritize measurement of cell quality of a candidate cell of the same frequency band utilizing a different RAT (intra-freq&inter-RAT measurement) over other cells in configuration regarding radio resource management (RRM).

The gNB 100 (control signal/reference signal processing unit 240) may transmit measConfig including an indication indicating the priority associated with either measId (measurement identity) or measObject (measurement object) to the UE 200. The gNB 100 (control signal/reference signal processing unit 240) may broadcast system information (SIB) including an indication indicating the priority.

### (3) Operation of radio communication system

Next, an operation of the radio communication system 10 will be described. Specifically, an operation example regarding a cell transition of the UE 200 when a plurality of RAT cells (a 4G cell, a 5G cell, and a 6G cell) are formed will be described.

### (3.1) Premise and issues

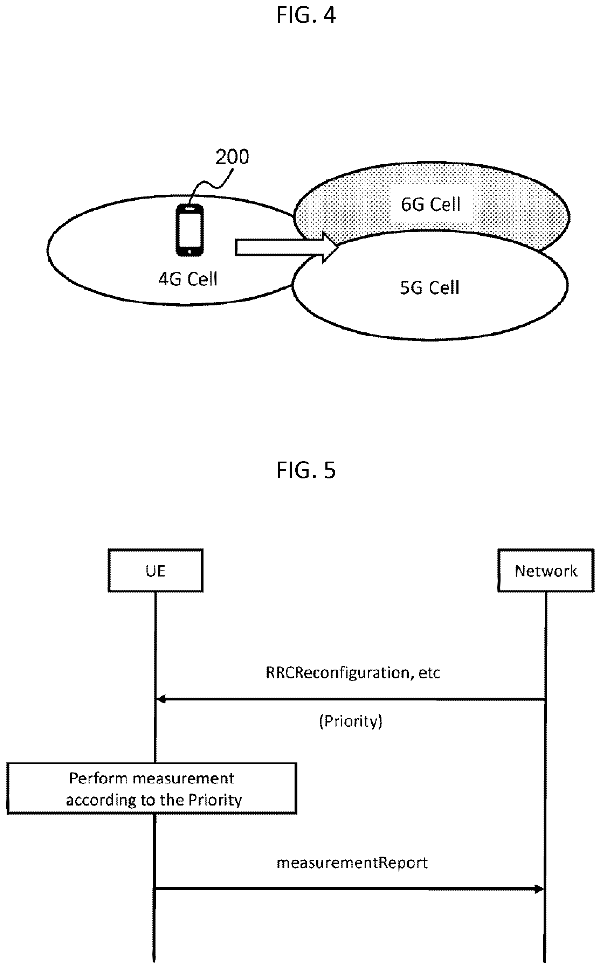

Fig. 4 shows a cell configuration example when a 4G cell, a 5G cell, and a 6G cell coexist. As described above, in the radio communication system 10, RATs of 4G, 5G, and 6G may be jointly used. As shown in Fig. 4, the UE 200 can transition to a 5G cell or a 6G cell from a state of residing in a 4G cell (which can be rephrased as standing by).

In such a cell configuration, a case where it is desired to preferentially transition the UE 200 to an arbitrary cell (for example, a 6G cell) may occur. For example, operational reasons by an operator or a state of the radio communication system 10 (for example, existence or non-existence of congestion) can be mentioned.

In the following operation example, an operation example for preferentially transitioning the UE 200 to a cell of a specific RAT or a cell utilizing a specific frequency band (band) will be described.

### (3.2) Operation example

Fig. 5 shows a basic sequence example regarding Measurement reporting. As shown in Fig. 5, the network (gNB 100) may transmit an RRC layer message including a priority (Priority) to the UE 200. Specifically, the gNB 100 may transmit an RRC Reconfiguration or the like including measConfig.

In this way, when the gNB 100 configures measConfig to the UE 200, an indication indicating a priority may be added to measId (measurement identity) or measObject (measurement object). As the priority, for example, any one of Priority (0, 1, 2, 3, ... 7) may be configured. A priority "7" may be the highest and "0" may be the lowest, or vice versa. Note that Priority does not necessarily have to be indicated by a number, and may simply indicate whether to prioritize.

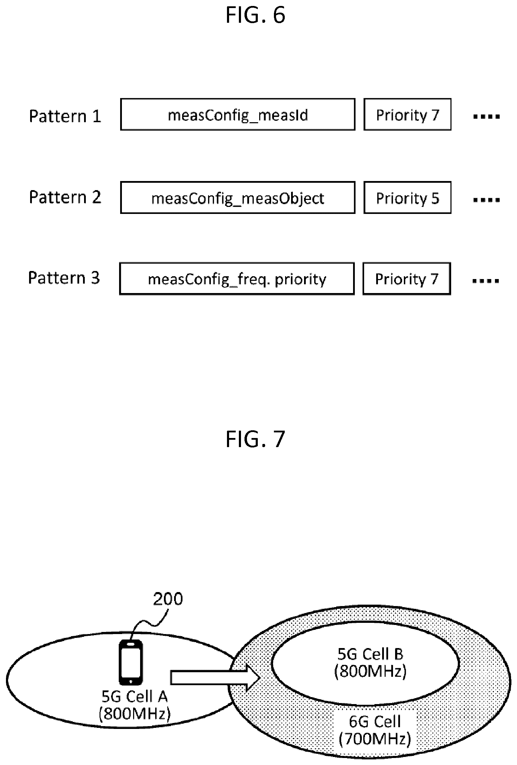

Fig. 6 shows a configuration example of measConfig. As shown in Fig. 6, Priority (any one of 0 to 7) may be added to measId or measObject (Pattern 1, 2). Further, Priority (any one of 0 to 7) may be added to frequency band (band) information included in measConfig (Pattern 3). Alternatively, Priority (any one of 0 to 7) may be added to measConfig itself.

The UE 200 may execute from a measurement associated with measId or measObject having a high priority. Further, upon Measurement reporting, the UE 200 may preferentially report a measurement result (Measurement Results) associated with measId or measObject having a high priority to the network.

The gNB 100 may configure a measurement priority of a 4G frequency, a 5G frequency, and a 6G frequency, or a frequency priority utilized (stayed) by the UE, to the UE. The configuration may be executed, for example, by using an RRC layer message. Specifically, RRC Reconfiguration or RRCRelease can be used (however, it is not necessarily limited to the RRC message). Further, the UE 200 may execute measurement from a RAT or a frequency (band) having a high priority.

Alternatively, the gNB 100 may broadcast a measurement priority of a 4G frequency, a 5G frequency, and a 6G frequency, or a frequency priority utilized (stayed) by the UE, using a SIB. As described above, the type of SIB does not have to be particularly limited.

The UE 200, when performing cell selection or reselection (cell selection/reselection) in an idle state, may refer to a RAT or frequency priority included in the SIB, and select a RAT, frequency, or cell having a high RAT or frequency priority.

Different measObjects may be configured for the 4G frequency, the 5G frequency, and the 6G frequency, respectively. That is, measObject may be divided for the 4G frequency, the 5G frequency, and the 6G frequency. Further, different measIds may be added to the 4G frequency, the 5G frequency, and the 6G frequency, respectively. Here, a priority of measObject or measId of the 6G frequency may be higher than other RAT frequencies.

The network may relax a condition satisfying a measurement event of a frequency or a cell that the network desires the UE 200 to preferentially access.

For example, when it is desired that the UE 200 preferentially accesses a 6G cell, the network may set thresholds for event A3, A4, A5, and event B1, B2 to be low regarding measurement of a cell that it is desired to preferentially access.

The network (gNB 100) may shorten a time until a start of Measurement reporting (timeToTrigger), or may add an offset value so that the event is easily satisfied.

Further, the network (gNB 100) may preferentially configure intra-freq&inter-RAT measurement to the UE 200 upon configuration of RRM, specifically, upon configuration of measConfig. That is, the UE 200 may preferentially execute intra-freq&inter-RAT measurement. Accordingly, since the UE 200 preferentially reports a result of intra-freq&inter-RAT measurement to the network, the UE 200 can be preferentially handed over to an inter-RAT Cell (for example, a 6G cell).

Note that when a plurality of Measurement reports of a 4G frequency, a 5G frequency, and a 6G frequency are simultaneously reported, the network (gNB 100) may preferentially hand over the UE 200 to a 6G frequency/cell.

As described above, in the radio communication system 10, MRSS may be applied, but MRSS is not necessarily applied. That is, even when MRSS is not applied, the operation example described above may be executed.

Fig. 7 shows a configuration example of a 5G cell and a 6G cell. As shown in Fig. 7, for example, when 5G cells A and B utilize an 800 MHz band and a 6G cell utilizes a 700 MHz band, when Measurement Results of the 5G cell B are reported by Measurement report, the gNB 100 may utilize Measurement Results of the 5G cell B to hand over the UE 200 to a 6G cell utilizing a frequency band close to the 5G cell B (which may be referred to as a hidden cell). That is, Measurement Results of the 5G cell B and the 6G cell may be handled equally, and the UE 200 may be preferentially handed over to a hidden cell (6G cell).

According to the operation example described above, when a 4G cell, a 5G cell, and a 6G cell coexist, a measurement configuration or system information including an indication indicating a priority can be utilized. Further, the UE 200 can control a measurement order of a plurality of candidate cells based on the priority, and transmit a measurement report including a measurement result measured according to the measurement order to a network. Specifically, the UE 200 can transmit a measurement report having a high priority to a network earlier than the measurement report having a low priority.

For this reason, it becomes possible to preferentially transition the UE 200 to a desired cell such as a cell according to a specific RAT.

Further, the priority may target each RAT, or may target each frequency band (band) utilized by a cell. Therefore, it becomes possible to transition the UE 200 to a desired cell more flexibly and preferentially.

As a result, since the UE 200 can be transitioned to a specific cell or frequency band such as a 6G cell more actively, needs of an operator and the like in a case where a 4G cell, a 5G cell, and a 6G cell coexist can be satisfied.

### (4) Other Embodiments

Although the embodiments have been described above, it is obvious to those skilled in the art that the present disclosure is not limited to the descriptions of the embodiments, and various modifications and improvements can be made.

For example, in the above-described embodiment, CHO and LTM have been described as examples, but as long as it is a technology that realizes a UE-led cell transition without an instruction from the network, a similar operation example may be applied. Further, in the above-described embodiment, the case where a 4G cell, a 5G cell, and a 6G cell coexist has been described, but a cell of yet another RAT may coexist, or any of the 4G cell, the 5G cell, and the 6G cell may not coexist.

Further, in the above description, "configure", "activate", "update", "indicate", "enable", "specify", and "select" may be read as being interchangeable with one another. Similarly, "link", "associate", "correspond", and "map" may be read as being interchangeable with one another, and "allocate", "assign", "monitor", and "map" may be read as being interchangeable with one another.

Furthermore, "specific", "dedicated", "UE-specific", and "UE-dedicated" may be read as being interchangeable with one another. Similarly, "common", "shared", "group-common", "UE-common", and "UE-shared" may be read as being interchangeable with one another.

In the present disclosure, terms such as "precoding", "precoder", "weight (precoding weight)", "Quasi-Co-Location (QCL)", "Transmission Configuration Indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

Further, the block configuration diagram (Fig. 3) used in the description of the above embodiment illustrates blocks in units of functions. These functional blocks (configuration units) are realized by any arbitrary combination of at least one of hardware and software. Further, the realization method of each functional block is not particularly limited. That is, each functional block may be realized using one physically or logically coupled device, or may be realized using a plurality of devices by directly or indirectly (for example, using wired, wireless, or the like) connecting two or more physically or logically separated devices. The functional block may be realized by combining software with the one device or the plurality of devices.

The functions include determining, deciding, judging, calculating, computing, processing, deriving, investigating, looking up, search, inquiry, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like, but are not limited thereto. For example, a functional block (configuration unit) that causes transmission to function is referred to as a transmitting unit or a transmitter. In any case, as described above, the realization method is not particularly limited.

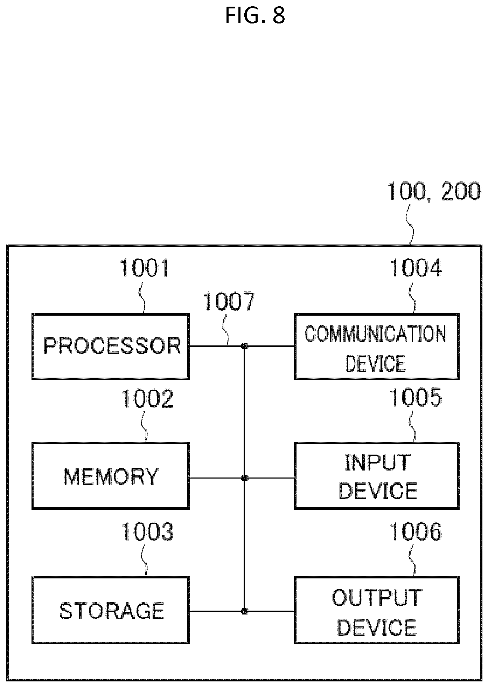

Furthermore, the gNB 100 and the UE 200 (the devices) described above may function as a computer performing the processing of the radio communication method of the present disclosure. Fig. 8 is a diagram illustrating an example of a hardware configuration of the device. As shown in Fig. 8, the device may be configured as a computer device including a processor 1001, a memory 1002, a storage 1003, a communication device 1004, an input device 1005, an output device 1006, a bus 1007, and the like.

Note that in the following description, the term "device" can be read as a circuit, a device, a unit, or the like. The hardware configuration of the device may be configured to include one or a plurality of each device shown in the drawing, or may be configured not to include a part of the devices.

Each functional block (see Fig. 3) of the device is realized by any hardware element of the computer device or a combination of the hardware elements.

Further, each function in the device is realized by causing the processor 1001 to perform calculation by loading predetermined software (program) on hardware such as the processor 1001 and the memory 1002, and controlling communication by the communication device 1004, or controlling at least one of reading and writing of data in the memory 1002 and the storage 1003.

The processor 1001, for example, operates an operating system to control the entire computer. The processor 1001 may be configured by a central processing unit (CPU) including an interface with a peripheral device, a control device, an arithmetic device, a register, and the like.

Further, the processor 1001 reads a program (program code), a software module, data, or the like from at least one of the storage 1003 and the communication device 1004 into the memory 1002, and executes various processing according to these. As the program, a program that causes a computer to execute at least a part of the operation described in the above embodiment is used. Furthermore, the various processing described above may be executed by one processor 1001, or may be executed simultaneously or sequentially by two or more processors 1001. The processor 1001 may be implemented by one or more chips. Note that the program may be transmitted from a network via an electric communication line.

The memory 1002 is a computer-readable recording medium, and may be configured by at least one of, for example, a Read Only Memory (ROM), an Erasable Programmable ROM (EPROM), an Electrically Erasable Programmable ROM (EEPROM), a Random Access Memory (RAM), and the like. The memory 1002 may be referred to as a register, a cache, a main memory (main storage device), or the like. The memory 1002 can store a program (program code), a software module, or the like executable to perform the method according to an embodiment of the present disclosure.

The storage 1003 is a computer-readable recording medium, and may be configured by at least one of, for example, an optical disk such as a Compact Disc ROM (CD-ROM), a hard disk drive, a flexible disk, a magneto-optical disk (for example, a compact disk, a digital versatile disk, a Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The above-described recording medium may be, for example, a database, a server, or another appropriate medium including at least one of the memory 1002 and the storage 1003.

The communication device 1004 is hardware (transmission/reception device) for performing communication between computers via at least one of a wired network and a wireless network, and is also referred to as, for example, a network device, a network controller, a network card, a communication module, or the like.

The communication device 1004 may be configured to include a high-frequency switch, a duplexer, a filter, a frequency synthesizer, and the like, for example, in order to realize at least one of Frequency Division Duplex (FDD) and Time Division Duplex (TDD).

The input device 1005 is an input device (for example, a keyboard, a mouse, a microphone, a switch, a button, a sensor, or the like) that accepts an input from the outside. The output device 1006 is an output device (for example, a display, a speaker, an LED lamp, or the like) that executes an output to the outside. Note that the input device 1005 and the output device 1006 may be an integrated configuration (for example, a touch panel).

Further, each device such as the processor 1001 and the memory 1002 is connected by the bus 1007 for communicating information. The bus 1007 may be configured using a single bus, or may be configured using different buses for each device.

Furthermore, the device may be configured to include hardware such as a microprocessor, a Digital Signal Processor (DSP), an Application Specific Integrated Circuit (ASIC), a Programmable Logic Device (PLD), and a Field Programmable Gate Array (FPGA), and a part or all of each functional block may be realized by the hardware. For example, the processor 1001 may be implemented using at least one of these pieces of hardware.

Further, the notification of information is not limited to the aspects/embodiments described in the present disclosure, and may be performed using another method. For example, the notification of information may be implemented by physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB))), other signals, or combinations thereof. Further, the RRC signaling may be referred to as an RRC message, and may be, for example, an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems utilizing other suitable systems, and next-generation systems extended based on these. Further, a plurality of systems may be combined (for example, a combination of at least one of LTE and LTE-A and 5G, or the like) and applied.

The processing procedures, sequences, flowcharts, and the like of each aspect/embodiment described in the present disclosure may be interchanged in order as long as there is no contradiction. For example, for the method described in the present disclosure, elements of various steps are presented using an exemplary order, and are not limited to the presented specific order.

The specific operation described to be performed by the base station in the present disclosure may be performed by its upper node in some cases. In a network consisting of one or a plurality of network nodes having a base station, it is obvious that various operations performed for communication with a terminal can be performed by at least one of the base station and another network node (for example, MME or S-GW can be considered, but is not limited thereto) other than the base station. The case where there is one other network node other than the base station has been exemplified above, but it may be a combination of a plurality of other network nodes (for example, MME and S-GW).

Information, signals (information and the like) can be output from a higher layer (or a lower layer) to a lower layer (or a higher layer). It may be input and output via a plurality of network nodes.

The input/output information may be stored in a specific location (for example, a memory) or managed using a management table. The input/output information can be overwritten, updated, or additionally written. The output information may be deleted. The input information may be transmitted to another device.

The determination may be performed by a value represented by one bit (0 or 1), may be performed by a boolean value (true or false), or may be performed by comparing numerical values (for example, comparing with a predetermined value).

Each aspect/embodiment described in the present disclosure may be used alone, in combination, or switched according to the execution. Further, notification of predetermined information (for example, notification of "being X") is not limited to being performed explicitly, but may be performed implicitly (for example, by not performing notification of the predetermined information).

Software, whether referred to as software, firmware, middleware, microcode, hardware description language, or by any other name, should be broadly interpreted to mean instructions, instruction sets, codes, code segments, program codes, programs, subprograms, software modules, applications, software applications, software packages, routines, subroutines, objects, executable files, execution threads, procedures, functions, and the like.

Further, software, instructions, information, and the like may be transmitted and received via a transmission medium. For example, when software is transmitted from a website, a server, or another remote source using at least one of a wired technology (coaxial cable, optical fiber cable, twisted pair, Digital Subscriber Line (DSL), etc.) and a wireless technology (infrared, microwave, etc.), at least one of these wired and wireless technologies is included within the definition of a transmission medium.

Information, signals, and the like described in the present disclosure may be represented using any of a variety of different technologies. For example, data, instructions, commands, information, signals, bits, symbols, chips, and the like that may be referred to throughout the above description may be represented by voltages, currents, electromagnetic waves, magnetic fields or magnetic particles, optical fields or photons, or any combination thereof.

Note that the terms described in the present disclosure and terms necessary for understanding the present disclosure may be replaced with terms having the same or similar meanings. For example, at least one of a channel and a symbol may be a signal (signaling). Further, the signal may be a message. Further, a Component Carrier (CC) may be referred to as a carrier frequency, a cell, a frequency carrier, or the like.

The terms "system" and "network" used in the present disclosure are used interchangeably.

Further, information, parameters, and the like described in the present disclosure may be represented using an absolute value, may be represented using a relative value from a predetermined value, or may be represented using another corresponding information. For example, radio resources may be instructed by an index.

The names used for the above-described parameters are not restrictive names in any respect. Furthermore, formulas and the like using these parameters may differ from those explicitly disclosed in the present disclosure. Since various channels (for example, PUCCH, PDCCH, etc.) and information elements can be identified by any suitable names, the various names assigned to these various channels and information elements are not restrictive names in any respect.

In the present disclosure, terms such as "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station is also referred to as terms such as a macro cell, a small cell, a femto cell, and a pico cell.

A base station can accommodate one or a plurality of (for example, three) cells (also referred to as sectors). When a base station accommodates a plurality of cells, the entire coverage area of the base station can be partitioned into multiple smaller areas, and each smaller area can provide a communication service by a base station subsystem (for example, an indoor small base station (Remote Radio Head: RRH)).

The term "cell" or "sector" refers to a part or whole of a coverage area of at least one of a base station and a base station subsystem that performs a communication service in this coverage.

In the present disclosure, a base station transmitting information to a terminal may be read as a base station instructing a terminal to perform control/operation based on the information.

In the present disclosure, terms such as "Mobile Station (MS)", "user terminal", "User Equipment (UE)", and "terminal" may be used interchangeably.

The mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmitting device, a receiving device, a communication device, or the like. Note that at least one of the base station and the mobile station may be a device mounted on a mobile body, the mobile body itself, or the like. The mobile body refers to a movable object, and its moving speed is arbitrary. Also, a case where the mobile body is stopped is naturally included. The mobile body includes, for example, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship (ship and other watercraft), an airplane, a rocket, an artificial satellite, a drone (registered trademark), a multicopter, a quadcopter, a balloon, and an object mounted on these, but is not limited thereto. Further, the mobile body may be a mobile body that autonomously travels based on an operation command. It may be a vehicle (for example, a car, an airplane, etc.), an unmanned mobile body (for example, a drone, an autonomous vehicle, etc.), or a robot (manned or unmanned). Note that at least one of the base station and the mobile station also includes a device that does not necessarily move during a communication operation. For example, at least one of the base station and the mobile station may be an IoT (Internet of Things) device such as a sensor.

Further, the base station in the present disclosure may be read as a mobile station (user terminal, hereinafter the same). For example, each aspect/embodiment of the present disclosure may be applied to a configuration in which communication between a base station and a mobile station is replaced with communication between a plurality of mobile stations (for example, which may be referred to as Device-to-Device (D2D), Vehicle-to-Everything (V2X), etc.). In this case, the mobile station may have the functions of the base station. In addition, wording such as "uplink" and "downlink" may be read as wording corresponding to terminal-to-terminal communication (for example, "side"). For example, an uplink channel, a downlink channel, and the like may be read as a side channel (or a side link).

Similarly, the mobile station in the present disclosure may be read as a base station. In this case, the base station may have the functions of the mobile station.

A radio frame may be configured by one or a plurality of frames in a time domain. Each of the one or plurality of frames in the time domain may be referred to as a subframe. The subframe may be further configured by one or a plurality of slots in the time domain. The subframe may have a fixed time length (for example, 1 ms) that does not depend on a numerology.

The numerology may be a communication parameter applied to at least one of transmission and reception of a certain signal or channel. The numerology may indicate at least one of, for example, SubCarrier Spacing (SCS), a bandwidth, a symbol length, a cyclic prefix length, a Transmission Time Interval (TTI), the number of symbols per TTI, a radio frame configuration, a specific filtering process performed by a transceiver in a frequency domain, a specific windowing process performed by a transceiver in a time domain, and the like.

A slot may be configured by one or a plurality of symbols (Orthogonal Frequency Division Multiplexing (OFDM) symbols, Single Carrier Frequency Division Multiple Access (SC-FDMA) symbols, etc.) in a time domain. The slot may be a time unit based on a numerology.

A slot may include a plurality of mini slots. Each mini slot may be configured by one or a plurality of symbols in a time domain. In addition, the mini slot may be referred to as a sub-slot. The mini slot may be configured by a smaller number of symbols than the slot. A PDSCH (or a PUSCH) transmitted in a time unit larger than the mini slot may be referred to as a PDSCH (or PUSCH) mapping type A. A PDSCH (or a PUSCH) transmitted using the mini slot may be referred to as a PDSCH (or PUSCH) mapping type B.

A radio frame, a subframe, a slot, a mini slot, and a symbol all represent a time unit when transmitting a signal. For a radio frame, a subframe, a slot, a mini slot, and a symbol, different names corresponding to each may be used.

For example, one subframe may be referred to as a Transmission Time Interval (TTI), a plurality of continuous subframes may be referred to as a TTI, or one slot or one mini slot may be referred to as a TTI. That is, at least one of the subframe and the TTI may be a subframe (1 ms) in the existing LTE, a period shorter than 1 ms (for example, 1 to 13 symbols), or a period longer than 1 ms. Note that the unit representing the TTI may be referred to as a slot, a mini slot, or the like instead of a subframe.

Here, the TTI refers to, for example, a minimum time unit of scheduling in radio communication. For example, in the LTE system, a base station performs scheduling to allocate radio resources (frequency bandwidth, transmission power, etc. that can be used in each user terminal) to each user terminal in units of TTI. The definition of TTI is not limited to this.

The TTI may be a transmission time unit of channel-encoded data packets (transport blocks), code blocks, code words, or the like, or may be a processing unit of scheduling, link adaptation, or the like. Note that when a TTI is given, a time interval (for example, the number of symbols) in which transport blocks, code blocks, code words, or the like are actually mapped may be shorter than the TTI.

When one slot or one mini slot is referred to as a TTI, one or more TTIs (that is, one or more slots or one or more mini slots) may be a minimum time unit of scheduling. Also, the number of slots (the number of mini slots) configuring the minimum time unit of scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, or the like. A TTI shorter than the normal TTI may be referred to as a shortened TTI, a short TTI, a partial TTI (partial or fractional TTI), a shortened subframe, a short subframe, a mini slot, a sub-slot, a slot, or the like.

Note that a long TTI (for example, normal TTI, subframe, etc.) may be read as a TTI having a time length exceeding 1 ms, and a short TTI (for example, shortened TTI, etc.) may be read as a TTI having a TTI length of less than the TTI length of the long TTI and 1 ms or more.

A resource block (RB) is a resource allocation unit of a time domain and a frequency domain, and may include one or a plurality of continuous subcarriers in the frequency domain. The number of subcarriers included in the RB may be the same regardless of the numerology, and may be, for example, 12. The number of subcarriers included in the RB may be determined based on the numerology.

Further, the time domain of the RB may include one or a plurality of symbols, and may have a length of 1 slot, 1 mini slot, 1 subframe, or 1 TTI. 1 TTI, 1 subframe, and the like may each be configured by one or a plurality of resource blocks.

Note that one or a plurality of RBs may be referred to as a Physical RB (PRB), a Sub-Carrier Group (SCG), a Resource Element Group (REG), a PRB pair, an RB pair, or the like.

Further, a resource block may be configured by one or a plurality of Resource Elements (REs). For example, 1 RE may be a radio resource region of 1 subcarrier and 1 symbol.

A Bandwidth Part (BWP) (which may be referred to as a partial bandwidth or the like) may represent a subset of continuous common RBs (common resource blocks) for a certain numerology in a certain carrier. Here, the common RB may be specified by an index of an RB based on a common reference point of the carrier. The PRB may be defined in a certain BWP and numbered within the BWP.

The BWP may include a BWP for UL (UL BWP) and a BWP for DL (DL BWP). One or a plurality of BWPs may be configured for a UE within one carrier.

At least one of the configured BWPs may be active, and the UE does not have to assume to transmit and receive a predetermined signal/channel outside the active BWP. Note that "cell", "carrier", and the like in the present disclosure may be read as "BWP".

The above-described structures of the radio frame, subframe, slot, mini slot, symbol, and the like are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a Cyclic Prefix (CP) length, and the like can be variously changed.

The terms "connected", "coupled", or any variations thereof mean any direct or indirect connection or coupling between two or more elements, and can include the presence of one or more intermediate elements between two elements that are "connected" or "coupled" to each other. The coupling or connection between elements may be physical, logical, or a combination thereof. For example, "connection" may be read as "access". As used in the present disclosure, two elements can be considered to be "connected" or "coupled" to each other using at least one of one or more wires, cables, and printed electrical connections, and as some non-limiting and non-exhaustive examples, using electromagnetic energy having wavelengths in a radio frequency region, a microwave region, and a light (both visible and invisible) region, and the like.

A reference signal can also be abbreviated as a Reference Signal (RS), and may be referred to as a Pilot depending on an applied standard.

The description "based on" used in the present disclosure does not mean "based only on" unless specifically stated otherwise. In other words, the description "based on" means both "based only on" and "based at least on".

"Means" in the configuration of each device described above may be replaced with "unit", "circuit", "device", or the like.

Any reference to an element using a designation such as "first", "second", etc. used in the present disclosure does not generally limit the amount or order of those elements. These designations can be used in the present disclosure as a convenient way to distinguish between two or more elements. Thus, reference to the first and second elements does not imply that only two elements can be adopted there, or that the first element must precede the second element in some way.

In the present disclosure, when "include", "including", and variations thereof are used, these terms are intended to be inclusive similarly to the term "comprising". Furthermore, the term "or" used in the present disclosure is intended not to be an exclusive OR.

In the present disclosure, for example, when an article such as "a", "an", and "the" in English is added by translation, the present disclosure may include that a noun following these articles is in plural.

The terms "determining" and "deciding" used in the present disclosure may encompass a wide variety of actions. "Determining" and "deciding" may include deeming that judging, calculating, computing, processing, deriving, investigating, looking up, search, inquiry (for example, search in a table, a database, or another data structure), ascertaining, etc. have been "determined" or "decided". In addition, "determining" and "deciding" may include deeming that receiving (for example, receiving information), transmitting (for example, transmitting information), input, output, accessing (for example, accessing data in a memory), etc. have been "determined" or "decided". Further, "determining" and "deciding" may include deeming that resolving, selecting, choosing, establishing, comparing, etc. have been "determined" or "decided". That is, "determining" and "deciding" may include deeming that some action has been "determined" or "decided". In addition, "determining (deciding)" may be read as "assuming", "expecting", "considering", or the like.

In the present disclosure, the term "A and B are different" may mean that "A and B are different from each other". Note that the term may mean that "A and B are each different from C". Terms such as "leave", "coupled", and the like may also be interpreted similarly to "different".

Fig. 9 shows a configuration example of a vehicle 2001. As shown in Fig. 9, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is configured by, for example, an engine, a motor, or a hybrid of an engine and a motor.

The steering unit 2003 includes at least a steering wheel (also referred to as a handle) and is configured to steer at least one of the front wheels and the rear wheels based on an operation of the steering wheel operated by a user.

The electronic control unit 2010 is configured by a microprocessor 2031, a memory (ROM, RAM) 2032, and a communication port (IO port) 2033. Signals from the various sensors 2021 to 2027 provided in the vehicle are input to the electronic control unit 2010. The electronic control unit 2010 may be referred to as an ECU (Electronic Control Unit).

The signals from the various sensors 2021 to 2028 include a current signal from a current sensor 2021 sensing a current of the motor, a rotation speed signal of the front wheels or the rear wheels acquired by a rotation speed sensor 2022, an air pressure signal of the front wheels or the rear wheels acquired by an air pressure sensor 2023, a vehicle speed signal acquired by a vehicle speed sensor 2024, an acceleration signal acquired by an acceleration sensor 2025, a depression amount signal of the accelerator pedal acquired by an accelerator pedal sensor 2029, a depression amount signal of the brake pedal acquired by a brake pedal sensor 2026, an operation signal of the shift lever acquired by a shift lever sensor 2027, and a detection signal for detecting an obstacle, a vehicle, a pedestrian, or the like acquired by an object detection sensor 2028.

The information service unit 2012 is configured by various devices for providing (outputting) various information such as driving information, traffic information, and entertainment information, such as a car navigation system, an audio system, a speaker, a television, and a radio, and one or more ECUs that control these devices. The information service unit 2012 uses information acquired from an external device via the communication module 2013 or the like to provide various multimedia information and multimedia services to occupants of the vehicle 1.

The information service unit 2012 may include an input device (for example, a keyboard, a mouse, a microphone, a switch, a button, a sensor, a touch panel, or the like) that receives an input from the outside, or may include an output device (for example, a display, a speaker, an LED lamp, a touch panel, or the like) that executes an output to the outside.

The driver assistance system unit 2030 is configured by various devices for providing functions to prevent accidents and reduce a driving load of a driver, such as a millimeter-wave radar, LiDAR (Light Detection and Ranging), a camera, a positioning locator (for example, GNSS, etc.), map information (for example, a high definition (HD) map, an autonomous vehicle (AV) map, etc.), a gyro system (for example, IMU (Inertial Measurement Unit), INS (Inertial Navigation System), etc.), an AI (Artificial Intelligence) chip, and an AI processor, and one or more ECUs that control these devices. Further, the driver assistance system unit 2030 transmits and receives various information via the communication module 2013, and realizes a driving assistance function or an autonomous driving function.

The communication module 2013 can communicate with the microprocessor 2031 and components of the vehicle 1 via the communication port. For example, the communication module 2013 transmits and receives data to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001 via the communication port 2033.

The communication module 2013 is a communication device capable of being controlled by the microprocessor 2031 of the electronic control unit 2010 and capable of communicating with an external device. For example, the communication module 2013 transmits and receives various information to and from the external device via radio communication. The communication module 2013 may be either inside or outside the electronic control unit 2010. The external device may be, for example, a base station, a mobile station, or the like.

The communication module 2013 may transmit at least one of signals from the above-described various sensors 2021 to 2028 input to the electronic control unit 2010, information obtained based on the signals, and information based on an input from the outside (user) obtained via the information service unit 2012 to the external device via radio communication. The electronic control unit 2010, the various sensors 2021 to 2028, the information service unit 2012, and the like may be referred to as an input unit that receives an input. For example, a PUSCH transmitted by the communication module 2013 may include information based on the input.

The communication module 2013 receives various information (traffic information, signal information, inter-vehicle information, etc.) transmitted from the external device, and displays it on the information service unit 2012 provided in the vehicle. The information service unit 2012 may be referred to as an output unit that outputs information (for example, outputs information to a device such as a display or a speaker based on a PDSCH received by the communication module 2013 (or data/information decoded from the PDSCH)). Further, the communication module 2013 stores the various information received from the external device in the memory 2032 usable by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like provided in the vehicle 2001.

### (Supplementary Note)

The above-described disclosure may be expressed as follows. A first feature is a terminal comprising: a reception unit that receives a measurement configuration including an indication indicating a priority; a control unit that controls a measurement order of a plurality of candidate cells based on the priority; and a transmission unit that transmits a measurement report including a measurement result measured according to the measurement order to a network.

A second feature is a terminal comprising: a reception unit that receives system information including an indication indicating a priority; a control unit that controls a measurement order of a plurality of candidate cells based on the priority; and a transmission unit that transmits a measurement report including a measurement result measured according to the measurement order to a network.

A third feature is the terminal according to the first or second feature, wherein the transmission unit transmits the measurement report having a high priority to the network earlier than the measurement report having a low priority.

A fourth feature is the terminal according to any one of the first to third features, wherein the control unit controls the measurement order based on the priority different for each radio access technology.

A fifth feature is the terminal according to any one of the first to fourth features, wherein the control unit controls the measurement order based on the priority different for each frequency band.

A sixth feature is the terminal according to any one of the first to fifth features, wherein the reception unit receives the measurement configuration including the indication associated with either a measurement identity or a measurement object, and the control unit controls the measurement order based on the measurement identity or the measurement object associated with the indication.

### DESCRIPTION OF REFERENCE NUMERALS

10 radio communication system
20 NG-RAN
100 gNB
200 UE
210 radio signal transmission/reception unit
220 amplifier unit
230 modulation/demodulation unit
240 control signal/reference signal processing unit
250 encoding/decoding unit
260 data transmission/reception unit
270 control unit
1001 processor
1002 memory
1003 storage
1004 communication device
1005 input device
1006 output device
1007 bus
2001 vehicle
2002 drive unit
2003 steering unit
2004 accelerator pedal
2005 brake pedal
2006 shift lever
2007 left and right front wheels
2008 left and right rear wheels
2009 axle
2010 electronic control unit
2012 information service unit
2013 communication module
2021 current sensor
2022 rotation speed sensor
2023 air pressure sensor
2024 vehicle speed sensor
2025 acceleration sensor
2026 brake pedal sensor
2027 shift lever sensor
2028 object detection sensor
2029 accelerator pedal sensor
2030 driver assistance system unit
2031 microprocessor
2032 memory (ROM, RAM)
2033 communication port

## Claims

1. A terminal comprising:
a reception unit that receives a measurement configuration including an indication indicating a priority;
a control unit that controls a measurement order of a plurality of candidate cells based on the priority; and
a transmission unit that transmits a measurement report including a measurement result measured according to the measurement order to a network.

2. A terminal comprising:
a reception unit that receives system information including an indication indicating a priority;
a control unit that controls a measurement order of a plurality of candidate cells based on the priority; and
a transmission unit that transmits a measurement report including a measurement result measured according to the measurement order to a network.

3. The terminal according to claim 1 or 2, wherein the transmission unit transmits the measurement report having a high priority to the network earlier than the measurement report having a low priority.

4. The terminal according to claim 1 or 2, wherein the control unit controls the measurement order based on the priority different for each radio access technology.

5. The terminal according to claim 1 or 2, wherein the control unit controls the measurement order based on the priority different for each frequency band.

6. The terminal according to claim 1, wherein
the reception unit receives the measurement configuration including the indication associated with either a measurement identity or a measurement object, and
the control unit controls the measurement order based on the measurement identity or the measurement object associated with the indication.
